# EUROPEAN PATENT APPLICATION

(11) **EP 1 493 482 A2**
(43) Date of publication of application: **05.01.2005**
(21) Application number: 04014976.7
(22) Date of filing: 25.06.2004
(51) Int. Cl.: B01D 53/92, F01N 3/20

(54) **Exhaust gas aftertreatment system for a power generator**

(30) Priority: 30.06.2003 US 610177
(71) Applicant: Caterpillar Inc., Peoria Illinois 61629-6490 (US)
(72) Inventor: Biswas, Subodh, C., Peoria Illinois 61629-6490 (US); Martin, Joel, T., Peoria Illinois 61629-6490 (US); Woods, Edward, J., Peoria Illinois 61629-6490 (US)
(74) Representative: Wagner, Karl H., Dipl.-Ing.

(57) **Abstract**

A power generation aftertreatment system (14) includes a duct system (24), mixing vanes (48) and a straightening vane (56). The duct system (24) has a first end (26) and a second end (28) spaced from the first end (26). The duct system (24) also has an elbow (34) located between the first end (26) and the second end (28). The elbow (34) is configured to change a direction of flow (40) of a fluid contained within the duct system (24). The mixing vanes (48) are connected to the duct system (24) and are in contact with the fluid contained within the duct system (24). The straightening vane (56) is connected to the duct system (24) between the elbow (34) and the second end (28) of the duct system (24). The straightening vane (56) is in contact with the fluid contained within the duct system (24).

## Description

### Technical Field

This invention relates generally to power generation systems, and more particularly to an aftertreatment system for use with a power generation system.

### Background

In recent years regulatory agencies around the world have instituted changes in the regulations governing the emission levels of power generation systems. The changing of these regulations has resulted in many manufacturers of power generation systems producing aftertreatment systems to be added to their power generation systems. These aftertreatment systems reduce the levels of regulated emissions produced by the power generation systems. However, designing aftertreatment systems for mobile power generation systems has posed some unique problems.

The aforementioned emission level regulations include restrictions upon the level of oxides of nitrogen ("NOx") present in power generation system exhaust. One method of reducing the level of NOx emitted by power generation systems includes the use of a selective catalytic reduction, or SCR, system. SCR systems utilize a reductant, such as aqueous urea, and a catalytic reaction to transform NOx into nitrogen and water vapor. For the SCR system to be the most effective, the reductant and the exhaust fluid of the power generation system must be sufficiently mixed prior to the initiation of the catalytic reaction. For large power generation systems a certain amount of mixing may be accomplished by providing a long duct system within which the reductant and exhaust fluid may by blended. However, in mobile power generation applications, or stationary applications having limited space constraints, it has not been possible to provide a duct system of enough length to sufficiently mix the reductant and the exhaust fluid.

Another problem commonly faced by SCR systems is unequal catalyst loading. As the reductant and exhaust fluid mix within the duct system of the SCR system, the mixed fluid is not evenly distributed across the cross-sectional area of the duct system. Therefore, when the fluid reaches a catalyst reactor, where the catalytic reaction takes place, some parts of the catalyst are more heavily loaded than others. This unequal catalyst loading results in sub-optimal performance of the SCR system.

United States Patent No. 6,449,947 issued to Liu et al. on 17 September 2002 discloses a turbulence generator for use in an SCR system. The turbulence generator is intended to reduce the mixing length required for a reductant to sufficiently mix with an exhaust of an engine. However, the turbulence generator adds unnecessary complexity to the SCR system and may still not produce sufficient mixing of the reductant and exhaust.

The power generation aftertreatment system of the present invention solves one or more of the problems set forth above.

### Summary of the Invention

A power generation aftertreatment system has a duct system containing a fluid. The duct system has a first end, a second end, and an elbow located between the first end and the second end. A plurality of mixing vanes are connected to the duct system, and a straightening vane is connected to the duct system.

A mobile power generation system has a mobile power module and an aftertreatment system connected to the mobile power module. The aftertreatment system has a duct system containing a fluid. The duct system has a first end, a second end, and an elbow located between the first end and the second end. A plurality of mixing vanes are connected to the duct system, and a straightening vane is connected to the duct system.

A method of treating an exhaust fluid of a power source includes bringing the exhaust fluid in contact with a mixing vane. The method further includes changing a direction of flow of the fluid and bringing the fluid into contact with a straightening vane.

### Brief Description of the Drawings

Fig. 1 is a side view of a mobile power generation system having an aftertreatment system;
Fig. 2 is a perspective view of the aftertreatment system of Fig. 1;
Fig. 3 is a cross-sectional view of the aftertreatment of Figs. 1 and 2; and
Fig. 4 is a perspective view of an alternative embodiment of the aftertreatment system of Fig. 1.

### Detailed Description

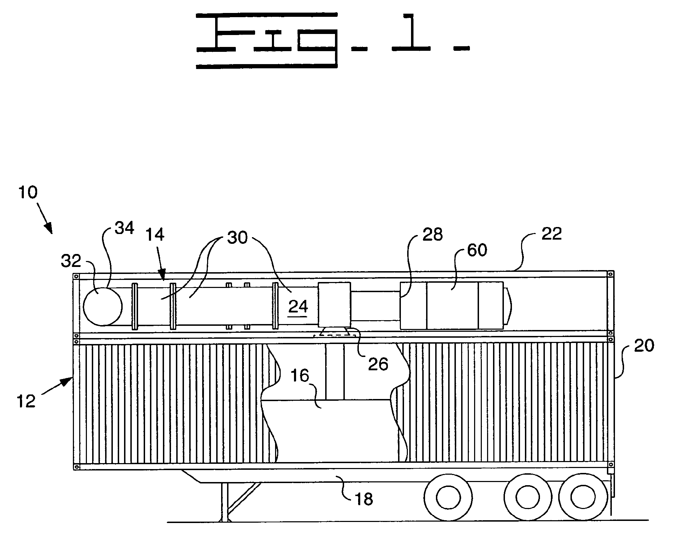

Referring to Fig. 1, a mobile power generation system 10 is shown. The power generation system 10 includes a mobile power module 12 and an aftertreatment system 14 connected to the mobile power module 12. The mobile power module 12 includes a power source 16. The power source 16 may be a spark-ignition engine, a compression-ignition engine, a homogenous charge compression ignition engine, a turbine, a fuel cell, or any other power-generating apparatus. As shown in Fig. 1, the mobile power generation system 10 is stationary when in operation but can be transported from one location to another, often via a trailer 18. However, as used herein, the term "mobile power generation system" includes systems that may be in motion when in operation, including the power systems of vehicles and other machines.

The mobile power module 12 in Fig. 1 includes a housing 20. The housing 20 of the mobile power module 12 may consist of an ISO container or another enclosure or container. In addition, the housing 20 of the mobile power module 12 may consist of an open frame that is connected to the power source 16 or may consist of the frame of a vehicle or other machine. In the embodiment of Fig. 1, the aftertreatment system 14 is connected to the housing 20 of the mobile power module 12 via an external process module 22. However, in other embodiments the aftertreatment system 14 may be connected directly to the housing 20 of the mobile power module 12.

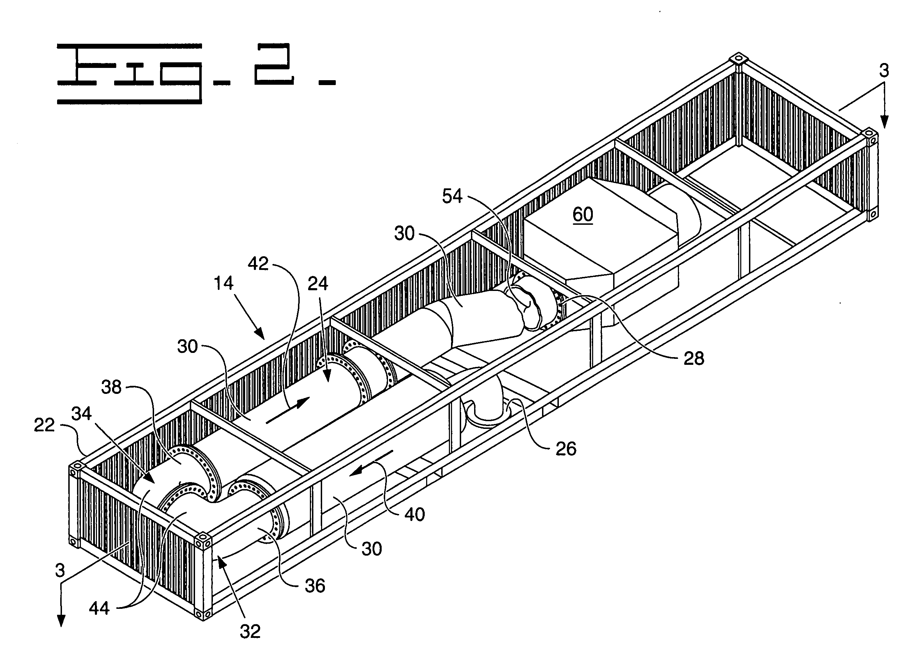

The aftertreatment system 14 has a duct system 24 that is connected to the power source 16 such that an exhaust fluid of the power source 16 may flow into the duct system 24. Referring to Fig. 2, the duct system 24 has a first end 26 and a second end 28 spaced apart from the first end 26. In the embodiment of Fig. 2, the duct system 24 is formed by several conduits 30 that are connected to each other. However, the duct system 24 may be formed by one or more conduits, tubes, pipes, ducts, or any other structures capable of conveying a fluid.

The duct system 24 of the aftertreatment system 14 has a means 32 for changing a direction of flow of the fluid within the duct system 24. In the aftertreatment system 14 of Fig. 2 the means 32 for changing the direction of flow consists of an elbow 34 located between the first end 26 and the second end 28 of the duct system 24. The elbow 34 has a first portion 36 connected to the duct system 24 and a second portion 38, spaced apart from the first portion 36, that is connected to the duct system 24. The fluid contained within the first portion 36 of the elbow 34 has a first direction of flow, indicated by arrow 40 in Fig. 2. The fluid contained within the second portion 38 of the elbow 34 has a second direction of flow, indicated by arrow 42 in Fig. 2. In Fig.2, the first direction of flow 40 and the second direction of flow 42 are separated by 180 degrees. However, the elbow 34 may be configured to change the first direction of flow 36 by any degree, including, but not limited to, 45 degrees, 90 degrees, 135 degrees, 180 degrees, 225 degrees, and 270 degrees. In Fig. 2, the elbow 34 is formed by two arcuate conduits 44 connected to each other. However, in other embodiments the elbow 34 may be formed by one or more conduits, tubes, pipes, ducts, or any other structures capable of changing the first direction of flow 40 of the fluid.

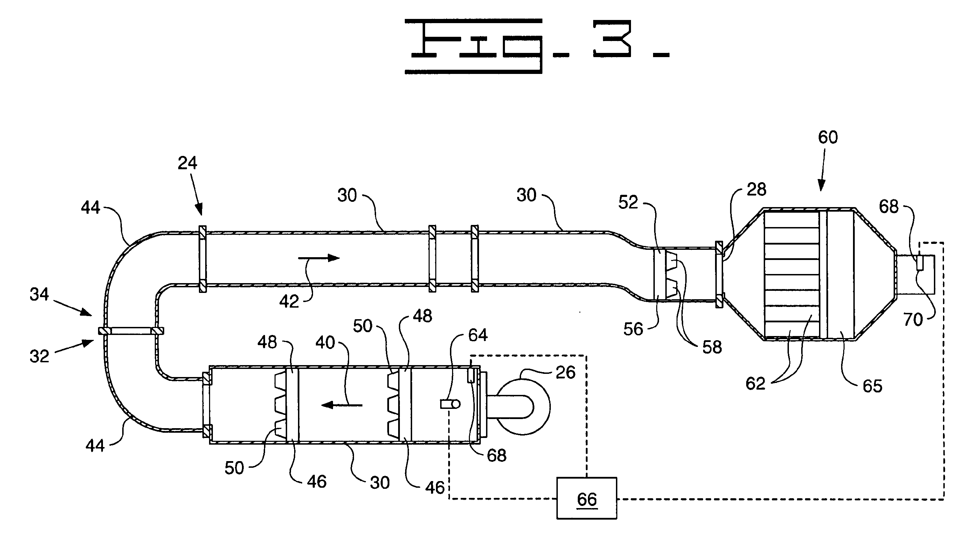

Now referring to Fig. 3, the aftertreatment system 14 has one or more means 46 for mixing the fluid within the duct system 24. In the embodiment of Fig. 3 the means 46 for mixing the fluid consists of one or more mixing vanes 48 connected to the duct system 24. In Fig. 3, the mixing vanes 48 are all connected to the duct system 24 between the first end 26 of the duct system 24 and the elbow 34. However, the mixing vanes 48 may be connected to the duct system 24 anywhere between the first end 26 of the duct system 24 and the second end 28 of the duct system 24. The mixing vanes 48 are in contact with the fluid contained within the duct system 24 and are configured such that turbulence is induced in the fluid as the fluid passes through the mixing vanes 48. In Fig. 3, the mixing vanes 48 have protruding elements 50 that induce turbulence in the fluid, but other designs of mixing vanes 48 may be used.

In Fig. 3, the aftertreatment system 14 has a means 52 for distributing the fluid within the duct system 24 across a cross-sectional area 54, shown in Fig. 2, of the duct system 24. In the embodiment of Fig. 3, the means 52 for distributing the fluid consists of a straightening vane 56 connected to the duct system 24. The straightening vane 56 is located between the elbow 34 and the second end 28 of the duct system 24. In one embodiment, the straightening vane 56 is located proximate the second end 28 of the duct system 24. As used herein, "proximate" shall mean "near; closely related in space." The straightening vane 56 is in contact with the fluid contained within the duct system 24 and is configured such that, after passing through the straightening vane 56, the fluid within the duct system 24 is more evenly distributed across the cross-sectional area 54 of the duct system 24. In Fig. 3, the straightening vane 56 has the same structure as the mixing vanes 48 and has protruding elements 58, but other designs of straightening vanes 56 may be used.

In Fig. 3, the aftertreatment system 14 has a catalyst reactor 60 connected to the duct system 24. In one embodiment, the catalyst reactor 60 is connected to the duct system 24 proximate the second end 28 of the duct system 24. The catalyst reactor 60 includes at least one catalyst 62 in contact with the fluid from the duct system 24. The at least one catalyst 62 may include platinum, vanadium, zeolite, titanium, tungsten trioxide, molybdenum trioxide, or some other element, compound, alloy or other material capable of facilitating a reaction between a reductant and NOx to create nitrogen and water vapor.

In Fig. 3, the aftertreatment system 14 has a reductant injector 64 connected to the duct system 24. The reductant injector 64 is connected to the duct system 24 between the first end 26 of the duct system 24 and the mixing vanes 48. The reductant injector 64 is configured such that it is capable of bringing a reductant into contact with the fluid within the duct system 24, thereby creating a treated exhaust fluid. The reductant may be gaseous ammonia (NH₃), ammonia in aqueous solution, aqueous urea, ammonia supplied from an ammonia generator using a solid source of ammonia such as ammonia carbamate or ammonia carbonate, or any other fluid capable of reacting with NOx in the catalyst reactor 60 to create nitrogen and water vapor.

In Fig. 3, the aftertreatment system 14 has an oxidation catalyst 65. However, other aftertreatment systems 14 may not have an oxidation catalyst 65. In the embodiment of Fig. 3, the oxidation catalyst 65 is connected to the catalyst reactor 60 such that the fluid within the duct system 24 contacts the oxidation catalyst 65 after the fluid contacts the at least one catalyst 62. In other embodiments the oxidation catalyst 65 may be connected to the duct system 24 in other locations. For example, the oxidation catalyst 65 may be connected to the duct system 24 such that the fluid within the duct system 24 contacts the oxidation catalyst 65 prior to contacting the reductant introduced by the reductant injector 64.

Referring to Fig. 3, the aftertreatment system 14 includes a control system 66 for setting a fixed quantity of reductant to be injected into the duct system 24 by the reductant injector 64. The control system 66 may be part of a control system (not shown) of the power source 16 or may be separate from the control system 66 of the power source 16. The control system 66 may include one or more sensors 68 configured to measure one or more attributes of an intake air supply of the power source 16, the exhaust fluid of the power source 16, the treated exhaust fluid within the duct system 24, the treated exhaust fluid after it exits the catalyst reactor 60, and/or the atmosphere. The sensors 68 may be located within an intake manifold (not shown) of the power source 16, within the duct system 24, within the catalyst reactor 60, outside of the catalyst reactor 60, or in any other location beneficial for obtaining data needed by the control system 66.

In one embodiment, the control system 66 includes at least one sensor 70 outside of the catalyst reactor 60 adapted to sense a level of NOx, reductant, ammonia, and/or another substance after the fluid in the duct system 24 has passed through the catalyst reactor 60. In such embodiment, the control system 66 is adapted to adjust the fixed quantity of reductant injected into the duct system 24 in response to the level reported by the sensor 70. Thus, in this embodiment, the control system 66 is a closed-loop control system. One type of sensor 70 that may be used in such a closed-loop control system is a chemilluminescence (CLD) gas analyzer. In another embodiment, the control system 66 is an open-loop control system, i.e. measurements of attributes of the treated exhaust fluid after it has passed through the catalyst reactor 60 are not used to adjust the fixed quantity of reductant injected into the duct system 24. An open-loop control system, as well as a closed-loop control system, may include a mass air flow sensor. As used herein, "mass air flow sensor" shall mean any sensor or other technology known in the art to indicate the mass flow of a fluid.

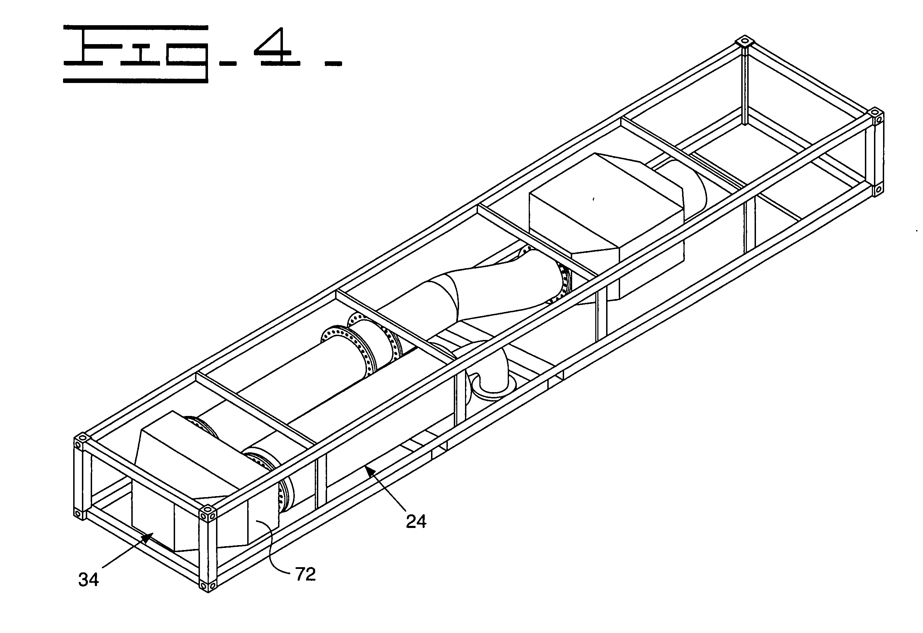

Referring to Fig. 4, the aftertreatment system 14 may also include a particulate filter 72. The particulate filter 72 is connected to the duct system 24 and is configured to contact the fluid within the duct system 24. In the embodiment of Fig. 4, the particulate filter 72 is contained within the elbow 34 of the duct system 24. However, one of ordinary skill in the art will recognize that the particulate filter 72 may be connected to the duct system 24 in other locations. The aftertreatment system 14 may also include other aftertreatment elements, such as sound attenuation devices, heat exchangers, and the like.

### Industrial Applicability

In operation, the power source 16 creates the exhaust fluid. The exhaust fluid enters the duct system 24 at the first end 26. The control system 66 prompts the reductant inj ector 64 to introduce a fixed quantity of reductant into the exhaust fluid, thereby creating the treated exhaust fluid. In the embodiment of Fig. 3, the treated exhaust fluid travels in the first direction of flow 40 and passes through the mixing vane 48. As the treated exhaust fluid passes through the mixing vane 48, turbulence is induced in the treated exhaust fluid, which causes the reductant to be distributed within the treated exhaust fluid. In Fig. 3, such turbulence is induced by the protruding elements 50 of the mixing vane 48. In the embodiment of Fig. 3, the treated exhaust fluid passes through another mixing vane 48 before entering the elbow 34. However, in other embodiments the treated exhaust fluid may contact zero, one, or a plurality of mixing vanes 48 prior to entering the elbow 34.

The treated exhaust fluid enters the elbow 34 of the duct system 24 via the first portion 36 of the elbow 34. Within the elbow 34, the direction of flow of the treated exhaust fluid is changed from the first direction of flow 40 to the second direction of flow 42. Such change of direction introduces additional turbulence into the treated exhaust fluid, thereby further distributing the reductant within the treated exhaust fluid. The treated exhaust fluid then exits the elbow 34 via the second portion 38 of the elbow 34. In the embodiment of Fig. 4, the particulate filter 72 is contained within the elbow 34. As the treated exhaust fluid passes through the particulate filter 72, particulates, such as soot, are removed from the treated exhaust fluid.

Referring to Fig. 3, after passing through the elbow 34, the treated exhaust fluid contacts the straightening vane 56. The straightening vane 56 distributes the treated exhaust fluid across the cross-sectional area 54, shown in Fig. 2, of the duct system 24. Such distribution prepares the treated exhaust fluid for entrance into the catalyst reactor 60. In the embodiment of Fig. 3, the treated exhaust fluid distribution is achieved by the protruding elements 58 of the straightening vane 56.

The treated exhaust fluid then enters the catalyst reactor 60. Within the catalyst reactor 60, the treated exhaust fluid comes into contact with the at least one catalyst 62. In the presence of the at least one catalyst 62, the reductant within the treated exhaust fluid reacts with NOx within the treated exhaust fluid to produce nitrogen and water vapor. In embodiments of the aftertreatment system 14 that do not have an oxidation catalyst 65 within the catalyst reactor 60, nitrogen, water vapor, and the remainder of the treated exhaust fluid then exits the catalyst reactor 60. In the embodiment of Fig. 3, however, the nitrogen, water vapor, and remainder of the treated exhaust fluid contact the oxidation catalyst 65. In the presence of the oxidation catalyst 65, the levels of carbon monoxide, formaldehyde and volatile organic compounds within the treated exhaust fluid are reduced. In addition, residual amounts of ammonia present within the treated exhaust fluid may be transformed into NOx and other exhaust gas chemistries in the presence of the oxidation catalyst 65. In the embodiment of Fig. 3, the fluid exiting the catalyst reactor 60 is released to the atmosphere. However, in other embodiments, the fluid may contact other aftertreatment elements before reaching the atmosphere.

In aftertreatment systems having a control system 66 that is a closed-loop control system, the at least one sensor 70 measures at least one attribute of the fluid exiting the catalyst reactor 60, such as the NOx level, reductant level, or ammonia level. In response to the data collected by the sensor 70, the control system 66 adjusts the fixed quantity of reductant that is introduced into the duct system 24. For example, if the data reported by the sensor 70 indicates that the NOx level within the fluid leaving the catalyst reactor 60 is too high, the control system 66 may increase the fixed quantity of reductant introduced into the duct system 24. On the other hand, if the data from the sensor 70 indicates that the ammonia level within the fluid exiting the catalyst reactor 60 is too high, the control system 66 may decrease the fixed quantity of reductant introduced into the duct system 24. In embodiments containing an oxidation catalyst 65, however, more complex closed-loop control systems may be required due to the influence of the oxidation catalyst 65 on the relative levels of ammonia and NOx within the treated exhaust fluid.

In aftertreatment systems having a control system 66 that is an open-loop control system, attributes of the fluid exiting the catalyst reactor 60 are not used to vary the fixed quantity of reductant introduced into the duct system 24. Other attributes of the intake air supply of the power source 16, the exhaust fluid of the power source 16, the treated exhaust fluid of the power source 16, and/or the atmosphere are measured. Examples of attributes that may be measured include, but are not limited to, pressure, temperature, humidity, and mass flow. In open-loop control systems, measurements of such attributes by one or more sensors 68, such as a mass air flow sensor, provide data to the control system 66. In response to such data, the control system 66 adjusts the fixed quantity of reductant introduced into the duct system 24.

The aftertreatment system 14 disclosed herein is particularly useful for use with mobile power generation systems or other power generation systems having limited space constraints. Because the elbow 34 of the duct system 24 changes the direction of flow of the treated exhaust fluid, the aftertreatment system 14 having the elbow 34 has a longer mixing length than an aftertreatment system of the same size that does not have an elbow. This additional mixing length permits better mixing of the reductant within the treated exhaust fluid, thereby resulting in a more complete reaction in the catalyst reactor 60. In addition, the act of changing the direction of flow of the treated exhaust fluid within the elbow 34 also increases the distribution of the reductant within the treated exhaust fluid.

The straightening vane 56 of the aftertreatment system 14 helps to reduce the problem of uneven catalyst loading. The straightening vane 56 causes the treated exhaust gas to be more evenly distributed across the cross-sectional area 54 of the duct system 24, and, therefore, the treated exhaust gas is more evenly distributed across the at least one catalyst 62 within the catalyst reactor 60. Such distribution increases the efficiency of the reaction within the catalyst reactor 60 and decreases the level of NOx emitted by the aftertreatment system 14.

Other aspects, objects, and advantages of this invention can be obtained from a study of the drawings, the disclosure, and the appended claims.

## Claims

1. A power generation aftertreatment system (14), comprising:
a duct system (24) containing a fluid, said duct system (24) having a first end (26), a second end (28) spaced from said first end (26), and an elbow (34) located between said first end (26) and said second end (28);
a plurality of mixing vanes (48) connected to said duct system (24), said plurality of mixing vanes (48) being in contact with said fluid; and
a straightening vane (56) connected to said duct system (24) between said elbow (34) and said second end (28), said straightening vane (56) being in contact with said fluid.

2. The power generation aftertreatment system (14) of claim 1 wherein said elbow (34) is configured to change a direction of flow (40) of said fluid at least 90 degrees.

3. The power generation aftertreatment system (14) of claim 1 wherein said elbow (34) is configured to change a direction of flow (40) of said fluid at least 180 degrees.

4. The power generation aftertreatment system (14) of claim 1 including a reductant injector (64) connected to said duct system (24) between said plurality of mixing vanes (48) and said first end (26) of said duct system (24), said reductant injector (64) configured to bring a fixed quantity of a reductant into contact with said fluid.

5. The power generation aftertreatment system (14) of claim 1 including a catalyst reactor (60) connected to said duct system (24) proximate said second end (28) of said duct system (24).

6. The power generation aftertreatment system (14) of claim 1 including a particulate filter (72) connected to said duct system (24).

7. The power generation aftertreatment system (14) of claim 6 wherein said particulate filter (72) is contained within said elbow (34) of said duct system (24).

8. The power generation aftertreatment system (14) of claim 1 including an oxidation catalyst (65) connected to said duct system (24).

9. The power generation aftertreatment system (14) of claim 4 including a control system (66) adapted to adjust said fixed quantity of said reductant.

10. The power generation aftertreatment system (14) of claim 9 wherein said control system (66) is a closed-loop control system.
